# EUROPÄISCHE PATENTSCHRIFT

(11) **EP 2 639 806 B1**
(45) Veröffentlichungstag und Bekanntmachung des Hinweises auf die Patenterteilung: **31.05.2017**
(21) Anmeldenummer: 13000807.1
(22) Anmeldetag: 16.02.2013
(51) Int. Cl.: H01H 25/06

(54) **Raumtemperaturregler der Elektro-Installationstechnik mit Drehbedienung**
Electrical installation technology temperature control device with rotary control
Régulateur de température de technologie d'installation électrique avec commande rotative

(30) Priorität: 17.03.2012 DE 102012005474
(43) Veröffentlichungstag der Anmeldung: 18.09.2013
(73) Patentinhaber: ABB AG, 68309 Mannheim (DE)
(72) Erfinder: Schulte-Lippern, Günter, 58513 Lüdenscheid (DE); Zierach, Falk, 58513 Lüdenscheid (DE); Wieske, Stefan, 58285 Gevelsberg (DE); Kemper, Jürgen, 59425 Unna (DE); Görlitzer, Martin, 58762 Altena (DE); Viol, Gustav, 58515 Lüdenscheid (DE); Kümmerling, Mike, 58579 Schalksmühle (DE)

(56) Entgegenhaltungen:
- EP-A2- 0 977 225
- EP-A2- 1 489 637
- DE-A1- 19 627 212
- DE-B3-102006 024 994
- US-A- 5 711 588
- US-A1- 2005 115 816
- US-A1- 2006 022 951

## Beschreibung

Die Erfindung betrifft einen Raumtemperaturregler der Elektro-Installationstechnik mit Drehbedienung. Eine Anwendung ist beispielsweise beim KNX (KONNEX) Bussystem gegeben.

Aus der EP 1 956 754 B1 ist ein Bediengerät der Gebäudesystemtechnik mit mindestens einem Bedienelement bekannt, welchem wahlweise unterschiedliche Funktionen zuordenbar sind und welches eine dem Bedienelement zugeordnete LED-Leuchtanzeige aufweist, wobei die LED-Leuchtanzeige mittels einer LED-Ansteuereinheit in Abhängigkeit der dem Bedienelement konkret zugeordneten Funktion in der Weise ansteuerbar ist, dass einer bestimmten Funktion eine bestimmte Farbe der LED-Leuchtanzeige zugeordnet ist. Zusätzlich ist ein Farbdisplay mit unterschiedlichen, den einzelnen Funktionen zugeordneten und in Abhängigkeit der konkret ausgewählten Funktion aktivierten oder desaktivierten Bildschirm-Symbolen vorgesehen, welchem jeweils eine mittels einer Farbdisplay-Ansteuereinheit ansteuerbaren Farbdisplay-Leuchtanzeige zugeordnet ist, deren Farbe der Farbe der LED-Leuchtanzeige entspricht. Vorteilhaft erkennt der Anwender bereits bei Betrachtung des Bediengerätes aus größerer Entfernung, welche Funktion über das Bediengerät konkret aufgerufen werden kann.

Aus der DE 20 2010 005 574 U1 ist ein Bedienteil, insbesondere zur Bedienung einer solarthermischen Heizungsanlage bekannt, welche eine Anzahl von Anzeigeelementen zur Anzeige von die zu bedienende Anlage betreffenden Daten und eine Anzahl von Betätigungselementen zur Eingabe von die zu bedienende Anlage betreffenden Daten aufweist. Die Betätigungselemente umfassen wenigstens ein Dreh-Betätigungselement, welches durch eine Drehbewegung betätigbar ist, wobei in dem Dreh-Betätigungselement wenigstens ein weiteres der Betätigungselemente angeordnet ist.Aus der EP 1 489 637 A2 ist ein Eingabegerät für die mobile Geräte bekannt, welche einen Drehknopf und eine Zentralscheibe aufweist, wobei Ecken der Zentralscheibe weitere Eingabe-Bedienelemente verkörpern. Der Erfindung liegt die Aufgabe zugrunde, einen optimierter Raumtemperaturregler der Elektro-Installationstechnik mit Drehbedienung anzugeben.

Diese Aufgabe wird erfindungsgemäß gelöst durch einen Raumtemperaturregler nach Anspruch 1. Die mit der Erfindung erzielbaren Vorteile bestehen insbesondere darin, dass sich alle Funktionen des Eingabegerätes als Raumtemperaturregler dem Bediener unmittelbar und intuitiv erschließen. Alle Funktionen sind über eine Ebene bedienbar, insbesondere sind keine "versteckten" Funktionen durch "langen" Tastendruck erforderlich. Die Bedienung ist "rasterfrei" und kraftfrei. Das Eingabegerät kann wahlweise als Unterputzgerät oder als Aufputzgerät realisiert werden. Das Eingabegerät ist vorteilhaft in Monoblocksystem-Technik ausgebildet.

Eine vorteilhafte Ausgestaltung des Eingabegerätes wird gebildet durch erste Anschlagkanten des Gerätesockels oder seiner Sockelabdeckung, welche mit zweiten Anschlagkanten der Zentralscheibe oder ihres Seitenrahmens derart zusammenwirken, dass sich eine begrenzte Linearbeweglichkeit der Zentralscheibe gegenüber dem Gerätesockel einstellt.Der Raumtemperaturregler weist ein relativ zur Drehbeweglichkeit des zentralen Drehknopfes feststehendes, unterhalb einer transparenten Frontscheibe des Drehknopfes angeordnetes, zentrales Display auf. Zweckmäßig dient dabei eine LED, insbesondere eine mehrfarbige LED, zur Hinterleuchtung des im Zentrum des Drehknopfes angeordneten Displays. Zur Optimierung der Lichtführung ist ein trichterförmiger Reflektor zwischen LED und Display angeordnet. Vorteilhaft ist ein Farbkonzept zur farblichen Kennzeichnung unterschiedlicher Funktionen vorgesehen.

Für die Kennzeichnung der Bedienelemente sind die Schalter / Taster vorzugsweise mit integrierten LEDs zur Hinterleuchtung von in den Ecken der Zentralscheibe oder ihrer Frontplatte angeordneten Funktionssymbolen über die Schalt- und Rückstellstifte versehen.

Eine Kopplung zwischen dem Drehknopf und einer Ansteuerung eines akustischen Signalgebers ist zweckmäßig zur Auslösung eines akustischen Signals während einer Drehbewegung des Drehknopfes vorgesehen, wodurch dem Bediener vorteilhaft ein akustisches Feedback zur Drehbewegung gegeben wird.

Bei bevorzugter Ausführung des Raumtemperaturreglers ist zweckmäßig zum Einen ein Temperatursensor vorgesehen und zum Anderen sind der Gerätesockel oder seine Sockelabdeckung mit Schlitzen zur Luftanströmung versehen.

Selbstverständlich wird das vorgeschlagene Eingabegerät der Elektro-Installationstechnik komplettiert durch einen Abdeckrahmen und kann somit mit beliebigen Komponenten eines Unterputz-Installationsgeräte-Programms für Steckdosen / Schalter / Taster / Dimmer / Gebäudesystemtechnik-Geräte kombiniert werden. Dabei können Abdeckrahmen 1fach, 2fach, 3fach, 4fach in gewünschtem Design, in gewünschter Farbe und mit gewünschtem Material (Kunststoff, Edelstahl) eingesetzt werden. Auf diese Weise wird das Eingabegerät harmonisch in ein Unterputz-Programm integriert und stellt keinen "Fremdkörper" im Hinblick auf Steckdosen / Schalter / Taster / Dimmer / Gebäudesystemtechnik-Geräte (KONNEX), Bewegungsmelder usw. dar.

Die Erfindung wird nachstehend an Hand der in der Zeichnung dargestellten Ausführungsbeispiele erläutert. Es zeigen:
- Fig. 1: eine Sicht auf ein Eingabegerät der Elektro-Installationstechnik mit Drehbedienung,
- Fig. 2: das Eingabegerät in perspektivischer Ansicht,
- Fig. 3: einen seitlichen Schnitt durch das Eingabegerät (siehe Schnittebene A-A in Fig. 1),
- Fig. 4: eine perspektivische Sicht auf das Eingabegerät bei entfernter Zentralscheibe,
- Fig. 5: einen seitlichen Schnitt durch das Eingabegerät (siehe Schnittebene B-B in Fig. 1),
- Fig. 6: eine Detailansicht auf das Eingabegerät bei entfernter Sockelabdeckung,
- Fig. 7: eine dreidimensionale Ansicht des seitlichen Schnitts durch das Eingabegerät gemäß Fig. 3.

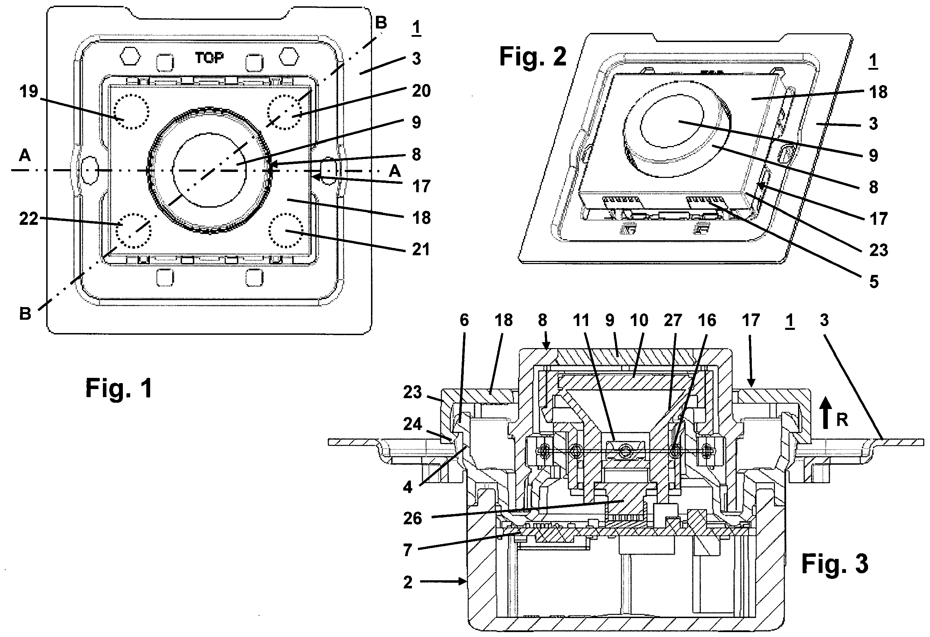

In Fig. 1 ist eine Sicht auf einen Raumtemperaturregler der Elektro-Installationstechnik mit Drehbedienung, dargestellt. Die Hauptkomponenten des Eingabegeräts 1 sind:
- ein für den Einbau in eine normgerechte Unterputz-Gerätedose geeigneter Gerätesockel mit einem zentralen Drehknopf 8 als erstes Eingabe-Bedienelement und einer transparenten Frontscheibe 9 im Deckel des "hülsenartigen" respektive "kappenartigen" Drehknopfs 8 zur Ermöglichung einer zentralen Anzeige sowie mit einem Tragring 3,
- eine Zentralscheibe 17, welche in Form einer Wippe mit schwimmender Lagerung ausgebildet ist und eine zentrale Ausnehmung zur Durchführung des Drehknopfs 8 aufweist, wobei die vier Ecken 19, 20, 21, 22 in der Frontplatte 18 der Zentralscheibe 17 als zweites, drittes, viertes, fünftes Eingabe-Bedienelement fungieren und jeweils zur Kennzeichnung der Bedienung / Funktion mit einem hinterleuchteten Funktionssymbol versehen sind.

In Fig. 1 sind zwei Schnittebenen A-A sowie B-B skizziert, welche zur Erläuterung der in den Figuren 3, 5, 7 gezeigten Schnitt-Darstellungen dienen.

In Fig. 2 ist ein Eingabegerät als Raumtemperaturregler 1 in perspektivischer Ansicht dargestellt. Dabei sind der zentrale Drehknopf 8 inklusive Frontscheibe 9, die Zentralscheibe 17 mit Frontplatte 18 und einem sich rechtwinklig zum Gerätesockel mit Tragring 3 hin erstreckenden umlaufenden Seitenrahmen 23 zu erkennen.

In Fig. 3 ist ein seitlicher Schnitt durch ein Eingabegerät 1 dargestellt - siehe hierzu auch die Schnittebene A-A in Fig. 1. Es ist zu erkennen, dass der Innenraum des Gerätesockels 2 von einer Sockelabdeckung 4 abgedeckt wird, an welcher äußere "erste" Anschlagkanten 6 ausgebildet sind, welche mit inneren "zweiten" Anschlagkanten 24 des Seitenrahmens 23 der Zentralscheibe 17 zusammenwirken. Alternativ können die "ersten" Anschlagkanten 6 auch unmittelbar am Gerätesockel 2 und/oder die "zweiten" Anschlagkanten 24 auch unmittelbar an der Zentralscheibe 17 angeordnet sein.

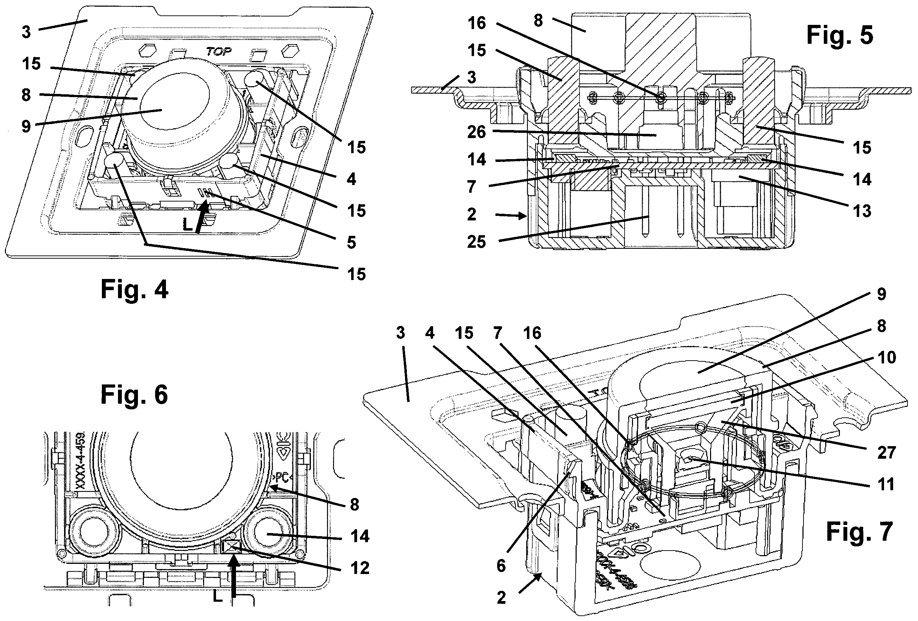

Die Zentralscheibe 17 wird mittels mehrerer aus einem federelastischen Material, insbesondere Silikon, bestehender Schalt- und Rückstellstifte - siehe die Bezugsziffer 15 in den Figuren 4, 5 und 7 - derart vom Gerätesockel 2 weg in Richtung des Pfeils R gedrückt, bis die Anschlagkanten 6 und 24 gegeneinander drücken, was der Grundstellung der Zentralscheibe 17 entspricht, in welcher die Zentralscheibe 17 parallel zur Frontseite des Gerätesockels 2 angeordnet ist. Sobald eine Kraft auf eine Ecke der Frontplatte 18 der Zentralscheibe 17 entgegen der Richtung des Pfeils R ausgeübt wird, bewegt sich diese beaufschlagte Ecke - siehe die in Fig. 1 bezeichneten Ecken 19, 20, 21 und 22 - in Richtung Gerätesockel 2 mit Tragring 3. Die ausgeübte Kraft wird über den betroffenen Schalt- und Rückstellstift auf einen von vier auf einer Leiterplatte 7 montierten Schalter / Taster (vorzugsweise Mikroschalter) - siehe die Bezugsziffer 14 in den Figuren 5 und 6 - weitergeleitet, wodurch ein gewünschtes Ausgangssignal generiert wird. Nach Beendigung der Kraftbeaufschlagung drückt der betroffene Schalt- und Rückstellstift die Zentralscheibe 17 zurück in die Grundstellung.

Fig. 3 zeigt des Weiteren die Ausgestaltung des mit der transparenten Frontscheibe 9 versehenen zentralen Drehknopfes 8 im Detail, insbesondere auch
- die drehbewegliche Verbindung / Lagerung des Drehknopfes 8 am Gerätesockel 2 mittels eines an der Sockelabdeckung 4 montierten Wälzlagers 16, beispielsweise eines Kugellagers, Rollenlagers oder Nadellagers,
- einen Signalgeber 26, beispielsweise einen Inkrementalgeber, welcher eine Drehbewegung des Drehknopfes 8 in ein entsprechendes Ausgangssignal umsetzt,
- ein relativ zur Drehbeweglichkeit des Drehknopfes 8 feststehendes, unterhalb der Frontscheibe 8 respektive im Innenraum des "hülsenartigen" Drehkopfes 8 angeordnetes zentrales Display 10, vorzugsweise LCD-Display, wobei eine Hinterleuchtung des Displays mittels einer LED 11, insbesondere mehrfarbige LED (RGB-LED: Rot-Grün-Blau) mit unterschiedlicher, gewünschter oder sich aus einem Regelvorgang ergebenden Farbe erfolgen kann und wobei mittels eines sich zwischen LED 11 und Display 10 trichterförmig ersteckenden Reflektors 27 eine Optimierung der Hinterleuchtung erzielt wird.

In Fig. 4 ist eine perspektivische Sicht auf ein Eingabegerät bei entfernter Zentralscheibe dargestellt. Es sind insbesondere die vier vorstehend bereits erwähnten, zwischen je einer Ecke der Frontplatte der Zentralscheibe und je einem zugeordneten Schalter / Taster angeordneten Schalt- und Rückstellstifte 15 gezeigt. Des Weiteren sind der Drehknopf 8 mit Frontscheibe 9, der Tragring 3 sowie die Sockelabdeckung 4 bezeichnet, welche von den Schalt- und Rückstellstiften 15 und vom Drehknopf 8 durchbrochen wird.

In Fig. 5 ist ein seitlicher Schnitt durch ein Eingabegerät dargestellt - siehe hierzu auch die Schnittebene B-B in Fig. 1. Es sind zu erkennen:
- die Lagerung / Befestigung des Drehknopfes 8 am Gerätesockel 2 mittels des Wälzlagers 16,
- die Anordnung der Schalt- und Rückstellstifte 15 in Relation zu den auf der Leiterplatte 7 montierten Schaltern / Tastern 14 mit jeweils integrierten LEDs,
- der mit dem Drehknopf 8 gekoppelte Signalgeber 26, eine Anschlusseinheit 25 des Eingabegeräts 1 an ein Bussystem (insbesondere KONNEX) und ein akustischer Signalgeber 13 als weitere Bauteile der Leiterplatte 7.

Die Schalt- und Rückstellstifte 15 sind vorzugsweise außen lackiert und innen transparent. Auf diese Weise dienen auch sie neben der Funktion "Schaltbetätigung eines Schalters / Tasters" und der Funktion "federnde Rückstellung der Zentralscheibe nach Betätigung einer ihrer Ecken in eine Grundstellung" auch der Funktion "Lichtleitung" zwischen den in den Schaltern / Tastern 14 integrierten LEDs und den hinterleuchteten Funktionssymbolen der Ecken 19, 20, 21, 22 - siehe hierzu auch Fig. 1. Der akustische Signalgeber 13 (Buzzer) dient zur Abgabe eines akustischen Feedbacks für den Bediener bei Drehung des Drehknopfes 8.

In Fig. 6 ist eine Detailansicht auf das Eingabegerät bei entfernter Sockelabdeckung dargestellt. Außer dem Drehknopf 8 und den Schaltern / Tastern 14 ist ein auf der Leiterplatte montierter Temperatursensor 12 gezeigt, welcher bei Ausführung des Eingabegerätes als Raumtemperaturregler notwendig ist. Um eine Anströmung des Temperatursensors 12 mit Raumluft zu ermöglichen, weist die Sockelabdeckung 4 am Ort des Temperatursensors 12 Schlitze 5 auf, wie dies in den Figuren 2 und 4 gezeigt ist. Die Luftanströmung ist in den Figuren 4 und 6 mit dem Pfeil L angedeutet.

In Fig. 7 ist eine dreidimensionale Ansicht des seitlichen Schnitts durch das Eingabegerät gemäß Fig. 3 dargestellt - siehe hierzu auch die Schnittebene A-A in Fig. 1. Es sind der Gerätesockel 2 mit Tragring 3 und die Sockelabdeckung 4 gezeigt, wobei die Sockelabdeckung 4 das Wälzlager 16 trägt und an ihrem Außenrand mit den "ersten" Anschlagkanten 6 für die Arretierung der Zentralscheibe versehen ist. Die Sockelabdeckung 4 wird vom Drehknopf 8 und den vier Schalt- und Rückstellstiften 15 durchbrochen. Das im Zentrum des Drehknopfes 8 angeordnete Display 10 kann durch die transparente Frontscheibe 9 abgelesen werden. Die Konfiguration mit LED 11 und Reflektor 27 stellt eine optimale Hinterleuchtung des Displays 10 sicher. Im Innenraum des Gerätesockels 2 ist die Leiterplatte 7 befestigt, auf welcher alle wesentlichen elektrischen / elektronischen Baukomponenten des Eingabegerätes montiert sind.

Bei Verwendung des Eingabegeräts 1 als Raumtemperaturregler können durch Beaufschlagung der Ecken 19 - 22 vier unterschiedliche Funktionen aktiviert werden. Dabei sind die zugeordneten Funktionssymbole bei eingeschaltetem Gerät in der Grundstellung weiß hinterleuchtet.

Bei Beaufschlagen der mit einem hinterleuchteten Lüfter-Symbol gekennzeichneten Ecke 19 wird die Funktion "Vorgabe der Lüfter-Stufe" aktiviert. Durch Drehen des Drehknopfes 8 können unterschiedliche Lüfterstufen eingestellt und gleichzeitig im Display 10 angezeigt werden, wie "Automatisch", "Aus", "Stufe 1", "Stufe 2", "Stufe 3", "Stufe 4", "Stufe 5" usw. Sobald die gewünschte Stufe angezeigt wird, erfolgt wiederum eine Beaufschlagung der Ecke 19, worauf die vorgegebene Stufe für die Raumtemperaturregelung übernommen wird.

Bei Beaufschlagen der mit einem hinterleuchteten Thermometer-Symbol gekennzeichneten Ecke 20 wird die Funktion "Vorgabe des Raumtemperatur-Sollwertes" aktiviert. Durch Drehen des Drehknopfes 8 kann der gewünschte Raumtemperatur-Sollwert eingestellt und zugleich im Display 10 angezeigt werden. Sobald der gewünschte Sollwert angezeigt wird, erfolgt wiederum eine Beaufschlagung der Ecke 20, worauf der vorgegebene Sollwert für die Raumtemperaturregelung übernommen wird.

Bei Beaufschlagen der mit einem hinterleuchteten Schriftzug "ECO" gekennzeichneten Ecke 21 wird die Funktion "Betrieb im ECO-Mode" aktiviert. Bei diesem speziellen Modus erfolgt die Temperaturregelung über eine übergeordnete Regelung und ist nicht mehr individuell für den betreffenden Raum vorgebbar und einstellbar.

Bei Beaufschlagung der mit einem hinterleuchteten Einschalt-Symbol gekennzeichneten Ecke 22 wird schrittweise die Funktion "Einschalten des Raumtemperaturreglers" / "Ausschalten des Raumtemperaturreglers" aktiviert. Im ausgeschalten Zustand wird lediglich noch das Einschalt-Symbol hinterleuchtet.

Die vom Eingabegerät 1 respektive Raumtemperaturregler mittels des Temperatursensors 12 gemessene Raumtemperatur wird in der Grundstellung und im eingeschalten Zustand im Display 10 angezeigt. Die Hinterleuchtung des Displays 10 wechselt die Farbe in Abhängigkeit der Differenz zwischen dem Raumtemperatur-Sollwert und dem aktuell ermittelten Raumtemperatur-Istwert (farbliche Funktionszuordnung):
- Raumtemperatur-Sollwert > Raumtemperatur-Istwert: Orange Hinterleuchtung (es wird geheizt);
- Raumtemperatur-Sollwert < Raumtemperatur-Istwert: Blaue Hinterleuchtung (es wird gekühlt);
- Raumtemperatur-Sollwert = Raumtemperatur-Istwert: Weiße Hinterleuchtung (weder Heizen noch Kühlen erforderlich);
- bei Einstellung der Funktion "Betrieb im ECO-Mode": Grüne Hinterleuchtung (Raumtemperatur wird nicht Raum-individuell, sondern übergeordnet geregelt).

Ein Farbwechsel erfolgt automatisch, sobald der Raumtemperaturregler eine Abweichung zwischen Raumtemperatur-Sollwert und Raumtemperatur-Istwert feststellt.

### Bezugszeichenliste

- 1: Eingabegerät der Elektro-Installationstechnik mit Drehbedienung, insbesondere Raumtemperaturregler
- 2: Gerätesockel
- 3: Tragring
- 4: Sockelabdeckung
- 5: Schlitze in der Sockelabdeckung (für Konvektion)
- 6: "erste" Anschlagkanten des Gerätesockels oder seiner Sockelabd.
- 7: Leiterplatte
- 8: Drehknopf als erstes Eingabe-Bedienelement
- 9: transparente Frontscheibe im Drehknopf
- 10: feststehendes Display
- 11: LED, insbesondere mehrfarbige LED für Hinterleuchtung des Displays
- 12: Temperatursensor
- 13: akustischer Signalgeber
- 14: Schalter / Taster (vorzugsweise Mikroschalter) mit integrierten LEDs
- 15: Schalt- und Rückstellstifte (Silikon, außen lackiert, innen transparent)
- 16: Wälzlager, z. B. Kugellager, Rollenlager, Nadellager
- 17: Zentralscheibe = Wippe mit schwimmender Lagerung mit zentraler Ausnehmung für den Durchgriff des Drehknopfes
- 18: Frontplatte der Zentralscheibe
- 19: erste Ecke als zweites Eingabe-Bedienelement und mit hinterleuchtetem Funktionssymbol
- 20: zweite Ecke als drittes Eingabe-Bedienelement und mit hinterleuchtetem Funktionssymbol
- 21: dritte Ecke als viertes Eingabe-Bedienelement und mit hinterleuchtetem Funktionssymbol
- 22: vierte Ecke als fünftes Eingabe-Bedienelement und mit hinterleuchtetem Funktionssymbol
- 23: Seitenrahmen der Zentralscheibe oder ihrer Frontplatte
- 24: "zweite" Anschlagkanten der Zentralscheibe oder ihres Seitenrahmens
- 25: Anschlusseinheit für ein Bussystem
- 26: Signalgeber, beispielsweise Inkrementalgeber
- 27: Reflektor

- A-A: Schnittebene
- B-B: Schnittebene
- R: Richtungspfeil für Bewegung einer Ecke
- L: Richtungspfeil für Luftanströmung

## Patentansprüche

1. Raumtemperaturregler (1) der Elektro-Installationstechnik mit Drehbedienung, mit einem Gerätesockel (2), einer Zentralscheibe (17) und einem zentralen Drehknopf (8) als erstem Eingabe-Bedienelement, komplettiert durch einen Abdeckrahmen,
• wobei der Drehknopf (8) über ein Wälzlager (16) am Gerätesockel (2) oder seiner Sockelabdeckung (4) drehbeweglich befestigt ist,
• wobei die Zentralscheibe (17) in Form einer Wippe mit gegenüber dem Gerätesockel (2) oder seiner Sockelabdeckung (4) schwimmender Lagerung und mit einer zentralen Ausnehmung für den Durchgriff des Drehknopfes (8) ausgebildet ist,
• wobei die Ecken (19, 20, 21, 22) der Zentralscheibe (17) oder ihrer Frontplatte (18) weitere Eingabe-Bedienelemente verkörpern und jede Ecke (19, 20, 21, 22) hierzu gekennzeichnet ist und bei Krafteinwirkung individuell über einen Schalt- und Rückstellstift (15) einen zugeordneten Schalter / Taster (14) beaufschlagt, und
• wobei unterhalb einer transparenten Frontscheibe (8) des Drehknopfes (8) ein relativ zur Drehbeweglichkeit des Drehknopfes (8) feststehendes, zentrales Display (10) angeordnet ist.

2. Raumtemperaturregler nach Anspruch 1, **gekennzeichnet durch** erste Anschlagkanten (6) des Gerätesockels (2) oder seiner Sockelabdeckung (4), welche mit zweiten Anschlagkanten (24) der Zentralscheibe (17) oder ihres Seitenrahmens (23) derart zusammenwirken, dass sich eine begrenzte Linearbeweglichkeit der Zentralscheibe (17) gegenüber dem Gerätesockel (2) einstellt.

3. Raumtemperaturregler nach Anspruch 1, **gekennzeichnet durch** eine LED (11), insbesondere eine mehrfarbige LED, zur Hinterleuchtung des Displays (10).

4. Raumtemperaturregler nach Anspruch 3, **gekennzeichnet durch** einen trichterförmigen Reflektor (27) zwischen LED (11) und Display (10).

5. Raumtemperaturregler nach Anspruch 3, **gekennzeichnet durch** ein Farbkonzept zur farblichen Kennzeichnung unterschiedlicher Funktionen.

6. Raumtemperaturregler nach Anspruch 1, **gekennzeichnet durch** Schalter / Taster (14) mit integrierten LEDs zur Hinterleuchtung von in den Ecken (19, 20, 21, 22) der Zentralscheibe (17) oder ihrer Frontplatte (18) angeordneten Funktionssymbolen über die Schalt- und Rückstellstifte (15).

7. Raumtemperaturregler nach Anspruch 1, **gekennzeichnet durch** eine Kopplung zwischen dem Drehknopf (8) und einer Ansteuerung eines akustischen Signalgebers (13) zur Auslösung eines akustischen Signals während einer Drehbewegung des Drehknopfes (8).

8. Raumtemperaturregler nach Anspruch 1, **dadurch gekennzeichnet, dass** bei Ausführung als Raumtemperaturregler ein Temperatursensor (12) vorsehen ist und der Gerätesockel (2) oder seine Sockelabdeckung (4) mit Schlitzen (5) zur Luftanströmung versehen sind.

## Claims

1. Room temperature controller (1) for electrical installation engineering, comprising a rotary operator control system, comprising a device base (2), a central plate (17) and a central rotary knob (8) as a first input operator control element, completed by a covering frame,
• wherein the rotary knob (8) is fastened in a rotatable manner to the device base (2) or its base cover (4) by means of a roller bearing (16),
• wherein the central plate (17) is designed in the form of a rocker with floating bearing in relation to the device base (2) or its base cover (4) and with a central recess for the rotary knob (8) to pass through,
• wherein the corners (19, 20, 21, 22) of the central plate (17) or its front panel (18) embody further input operator control elements and each corner (19, 20, 21, 22) is marked for this purpose and, when force is applied, an associated switch/pushbutton (14) is acted on individually by means of a switching and return pin (15), and
• wherein a central display (10) which is stationary relative to the rotational mobility of the rotary knob (8) is arranged below a transparent front plate (8) of the rotary knob (8).

2. Room temperature controller according to Claim 1, **characterized by** first stop edges (6) of the device base (2) or its base cover (4), which stop edges interact with second stop edges (24) of the central plate (17) or its side frame (23) in such a way that limited linear mobility of the central plate (17) in relation to the device base (2) is established.

3. Room temperature controller according to Claim 1, **characterized by** an LED (11), in particular a multicoloured LED, for backlighting the display (10).

4. Room temperature controller according to Claim 3, **characterized by** a funnel-shaped reflector (27) between the LED (11) and the display (10).

5. Room temperature controller according to Claim 3, **characterized by** a colour scheme for identifying different functions in a colour-coded manner.

6. Room temperature controller according to Claim 1, **characterized by** switches/pushbuttons (14) with integrated LEDs for backlighting function symbols, which are arranged in the corners (19, 20, 21, 22) of the central plate (17) or its front plate (18), by means of the switching and return pins (15).

7. Room temperature controller according to Claim 1, **characterized by** a coupling between the rotary knob (8) and actuation of an acoustic signal transmitter (13) for tripping an acoustic signal during a rotational movement of the rotary knob (8).

8. Room temperature controller according to Claim 1, **characterized in that**, when designed as a room temperature controller, a temperature sensor (12) is provided and the device base (2) or its base cover (4) are provided with slots (5) for air inflow.

## Revendications

1. Régulateur de température d'une pièce (1) à commande rotative, issu de la technologie des installations électriques, avec un socle d'appareil (2), un disque central (17) et un bouton rotatif (8) central servant de premier élément de commande par saisie, complété par un cadre de recouvrement,
- où le bouton rotatif (8) est fixé au socle de l'appareil (2) par l'intermédiaire d'un palier à roulement (16) ou est fixé de manière mobile en rotation à son cache-embase (4) ;
- où le disque central (17) se présente sous la forme d'une bascule avec un montage flottant par rapport au socle de l'appareil (2) ou par rapport à son cacheembase (4) et avec un évidement central destiné à l'insertion du bouton rotatif (8) ;
- où les coins (19, 20, 21, 22) du disque central (17) ou de sa plaque frontale (18) incarnent d'autres éléments de commande par saisie et où chaque coin (19, 20, 21, 22) est caractérisé à cet effet et, en cas d'application d'une force, actionne individuellement un commutateur ou une touche (14) associé(e) par l'intermédiaire d'une tige de commutation et de réinitialisation (15) ; et
- où un affichage (10) central est disposé au-dessous d'un disque frontal (8) transparent du bouton rotatif (8), lequel affichage est fixe par rapport au déplacement rotatif du bouton rotatif (8).

2. Régulateur de température d'une pièce selon la revendication 1, **caractérisé par** des premières bordures de butée (6) du socle de l'appareil (2) ou de son cache-embase (4), lesquelles bordures de butée interagissent avec des deuxièmes bordures de butée (24) du disque central (17) ou de son châssis latéral (23), de telle sorte qu'un déplacement linéaire limité du disque central (17) est obtenu par rapport au socle de l'appareil (2).

3. Régulateur de température d'une pièce selon la revendication 1, **caractérisé par** une diode électroluminescente (DEL) (11), en particulier une DEL multicolore, destinée au rétroéclairage de l'affichage (10).

4. Régulateur de température d'une pièce selon la revendication 3, **caractérisé par** un réflecteur (27) en forme d'entonnoir se trouvant entre la DEL (11) et l'affichage (10).

5. Régulateur de température d'une pièce selon la revendication 3, **caractérisé par** un concept de couleur en vue de l'identification de diverses fonctionnalités par des codes de couleur.

6. Régulateur de température d'une pièce selon la revendication 1, **caractérisé par** un commutateur ou par une touche (14) avec des DEL intégrées destinées au rétroéclairage des symboles de fonction disposés dans les coins (19, 20, 21, 22) du disque central (17) ou de sa plaque frontale (18), par l'intermédiaire des tiges de commutation et de réinitialisation (15).

7. Régulateur de température d'une pièce selon la revendication 1, **caractérisé par** un couplage réalisé entre le bouton rotatif (8) et une commande d'un transmetteur de signaux acoustiques (13) en vue de la résolution d'un signal acoustique pendant un mouvement rotatif du bouton rotatif (8).

8. Régulateur de température d'une pièce selon la revendication 1, **caractérisé en ce qu'**un capteur de température (12) est prévu lors de la configuration en tant que régulateur de température d'une pièce et caractérisé en ce le socle de l'appareil (2) ou son cache-embase (4) est pourvu de fentes (5) destinées à la circulation de l'air.
